# EUROPEAN PATENT APPLICATION

(11) **EP 1 467 301 A1**
(43) Date of publication of application: **13.10.2004**
(21) Application number: 04100505.9
(22) Date of filing: 11.02.2004
(51) Int. Cl.: G06F 17/60

(54) **System and method for downloading marketing messages to a point of sale printer**

(30) Priority: 14.02.2003 US 448302 P; 05.05.2003 US 429358
(71) Applicant: Axiohm Transaction Solutions, Inc., Ithaca, NY 14850 (US)
(72) Inventor: Nye III, Andrew B., Skaneateles, NY 13152 (US); Gilbert, Jeffrey, Homer, NY 13077 (US); Turner, Kyle, Ithaca, NY 14850 (US); Kobziar, Andrew, Ithaca, NY 14850 (US)
(74) Representative: Brunner, Michael John

(57) **Abstract**

A scheduled advertising method and system for printing marketing messages on a point of sale (POS) printer uses new POS printer capabilities with existing computer database and networking capabilities to implement a functional and economic marketing message scheduling and delivery system to retail end points. Providing dynamic marketing messaging capabilities on transaction receipts in a multi-lane retail POS environment, which includes a POS retail server and multiple host terminals with receipt printers in a multilane check-out configuration, is accomplished using various levels of scheduling services and databases which associate a schedule with each marketing message. The system operates within the existing retail POS environment, so it does not require a separate hardware system.

## Description

### FIELD OF THE INVENTION

This invention relates generally to the field of point-of-sale (POS) systems, and more specifically to a system for downloading and printing in-house and consumer product group marketing messages on a point-of-sale printer, with the system being independent of the underlying POS application or retail database.

### BACKGROUND OF THE INVENTION

The point of sale (POS) sales receipt is recognized as a customer loyalty marketing tool. It is common today for retailers to go well beyond the traditional company logo and place discount coupons, promotional offers, loyalty programs, and other marketing messages on the receipt. In the dynamic and competitive retail marketplace, these messages must be updated seasonally, weekly, daily, and even perhaps by individual customer.

The retail application providers supply the retailer with a very limited set of tools to "manage" the receipt. This is due primarily to the need as perceived by the application provider to appeal to the widest and most generic set of receipt printers in the marketplace. Thus, the support for receipt management is still highly text-based, with only simple graphics supported. The retailer is provided with very little capability for revising the format and content of the receipt. The application provider also ignores those special features of a printer that allow for the acquisition of workload tallies, health status, and configuration capabilities of the printer. A great deal of available information is thus left unused.

The concept of using the sales receipt as a marketing tool can be extended to the consumer brands which a retail store carries. Just as a sales receipt is a good way to send a marketing message to a target audience for the retailer, marketing message coupons are a good way to emphasize consumer brands. However, requiring the present capability at a retailer's check-out lane involves additional systems at the retail level with "hooks" into the retailer's POS system. This is a complex and costly way of generating marketing messages at the check-out lane, with the consumer being confronted with both a sales receipt and a separate marketing message coupon. Such coupons are generated based on either real-time purchase criteria or historical purchase data embedded in the retailer's POS system.

Point-of-sale systems are not normally equipped to handle discount coupons, except that a checker at a terminal can scan or key in coupon values to be discounted from a customer's bill. As every frequent visitor to a grocery store knows, many manufacturers distribute discount coupons for their products, either through mass mailings, through free standing inserts, such as newspapers, enclosing them in similar or related product packages or through an in lane decision based time of sale distribution method. Consumer product groups have expressed discontent with the costs of mass mailings and the lack of customer response to free standing inserts. Although coupons that are attached to a similar product are effective, they do not influence customers that have not purchased products from that consumer group. The final option, decision-based point of sale couple distribution, has proven to be the most effective of all coupon distribution techniques to date.

Current decision-based distribution systems possess several disadvantages. For example, these systems typically require a secondary printer at the point of sale that is dedicated solely to the printing of coupon material. The support of this additional hardware requires that the participating retail establishment maintain a dedicated stock of consumables dedicated solely to supporting this coupon printer. The retailer must also provide training on loading, maintaining and operating this secondary printer.

In addition to the expenses associated with maintaining these systems, there are significant physical disadvantages to decision-based distribution. As more components are used in a POS system, there is an increased need to fit the required hardware into existing checkout lanes. The physical presence of a second printer that is dedicated solely to printing coupons is impractical. Although the redemption rates resulting from this type of coupon distribution are high as compared to the alternatives, many of the coupons do not actually make it into the hands of the consumers. Customers often forget coupons generated at a secondary printer during the normal exchange of monies and receipts at a checkout lane. Because of this failure to place the coupon into the hands of the customer, the consumer product group who paid for or sponsored the advertisement did not receive the bargained for service.

A further disadvantage of conventional POS coupon distribution methods is that they often require intrusive software "hooks" that allow the coupon system to utilize the frequent shopper database maintained by the retailer. Although analysis of this type of data increases the functionality of this type of coupon distribution, it is often regarded as intrusive and even an invasion of privacy.

Retailers that take part in POS coupon distribution methods are often dissatisfied with the lack of control they have over what is printed on the coupon. Grocery store operation is typically a low margin business and sales of product from major consumer brand groups often have margins as low as two percent (2%). Grocery stores often retain higher margins on offerings such as prepared foods and store branded products, however, but posses limited options for advertising such products. Conventional decision-based POS coupon distribution systems only provide limited and costly options for the retailer to advertise its higher margin products. The actual decision-based POS coupon distribution systems can be very expensive.

U.S Patent No. 5,557,721 (Fite et al.) discloses a method and apparatus for displaying advertisements and printing coupons on remote systems of a distributed data processing system. The reference covers only some of the areas of the present invention, uses different methods and older technology than the present invention, and defines a system that targets the POS display. The disclosed use of the printer is straight-forward, without taking advantage of any special printer capabilities.

### SUMMARY OF THE INVENTION

Briefly stated, a scheduled advertising method and system for printing marketing messages on a point of sale (POS) printer uses new POS printer capabilities with existing computer database and networking capabilities to implement a functional and economic marketing message scheduling and delivery system to retail end points. Providing dynamic marketing messaging capabilities on transaction receipts in a multi-lane retail POS environment, which includes a POS retail server and multiple host terminals with receipt printers in a multilane check-out configuration, is accomplished using various levels of scheduling services and databases which associate a schedule with each marketing message. The system operates within the existing retail POS environment, so it does not require a separate hardware system.

The system of the present invention operates independently of the retail POS application and retailer database. As such, it can be deployed in a retail environment without the need for complicity by the retail POS application or the use of retail database information. The system delivers the marketing message to retail transaction receipts, while avoiding the limiting features of customer database criteria or real-time product purchase criteria.

According to an embodiment of the invention, a system for downloading and scheduling marketing messages to be printed on a point of sale (POS) printer controlled by a host terminal includes first means for executing instructions embodied in machine readable code; the first means including means for downloading a marketing message from a first party; the first means including means for storing the downloaded marketing message in a first storage medium; the first means including means for scheduling the marketing message to be printed on the POS printer on at least one predetermined time and date; the first means including means for associating the marketing message with its printing schedule; second means for executing instructions in machine readable code; the second means including means for downloading the marketing message and its associated schedule from the first storage medium to a second storage medium; the second means including means for associating the marketing message and its associated schedule with the host terminal; third means for executing instructions in machine readable code; and the third means including means for downloading the marketing message and its associated schedule and its designated host terminal from the second storage medium to a third storage medium.

According to an embodiment of the invention, a method for downloading and scheduling marketing messages to be printed on a point of sale (POS) printer controlled by a host terminal includes the steps of (a) downloading a marketing message from a first party; (b) storing the downloaded marketing message in a first storage medium; (c) scheduling the marketing message to be printed on the POS printer on at least one predetermined time and date; (d) associating the marketing message with its printing schedule; (e) downloading the marketing message and its associated schedule from the first storage medium to a second storage medium; (f) associating the marketing message and its associated schedule with the host terminal; and (g) downloading the marketing message and its associated schedule and its designated host terminal from the second storage medium to a third storage medium.

### BRIEF DESCRIPTION OF THE DRAWINGS

Fig. 1 shows a receipt produced by an embodiment of the present invention;
Fig. 2 shows a block diagram of a system according to an embodiment of the present invention;
Fig. 3 shows a schematic of the components of the present invention in which a point-of-sale system records sales transactions involving marketing messages;
Fig. 4 shows an illustrative example of an embodiment of the present invention;
Fig. 5 shows a census view used in a user interface according to an embodiment of the present invention;
Fig. 6 shows a group view used in the user interface according to an embodiment of the present invention;
Fig. 7 shows a jobs view used in the user interface according to an embodiment of the present invention;
Fig. 8 shows a scheduler view used in the user interface according to an embodiment of the present invention; and
Fig. 9 shows a tally view used in the user interface according to an embodiment of the present invention.

### DETAILED DESCRIPTION OF THE PREFERRED EMBODIMENT

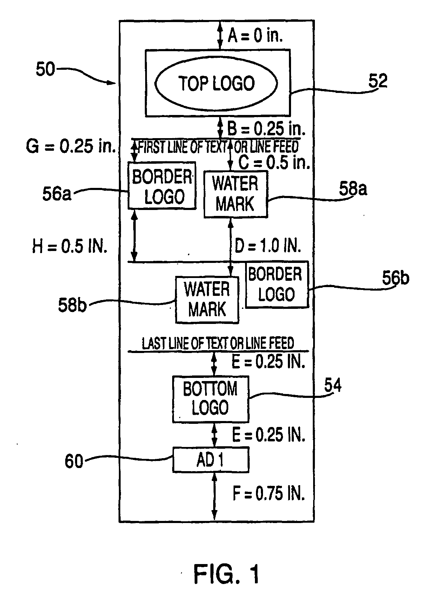

Referring now to the figures wherein like numerals refer to like parts throughout, Fig. 1 shows a receipt 50 produced according to an embodiment of the invention. A top logo 52 is preferably a graphic appearing at the top or start of receipt 50. A bottom logo 54 is preferably a graphic appearing at the bottom or end of receipt 50. Message(s) or border logos 56a, 56b are preferably text messages appearing in the margins of receipt 50. A plurality of watermarks 58a, 58b are preferably graphics that are repeated in the background of receipt 50, usually printed lightly so that readable text can be superimposed. A marketing message 60 is either a graphic or text message that endorses a specific product, brand, or retail store. Distances A-H are specified depending on the dimensions of the receipt being printed. In one embodiment of receipt 50, A=0", B=0.25", C=0.5", D=1.0", E=0.25", F=0.75", G=0.25", and H=0.5". The gap from the top of receipt 50 to the beginning of top logo 52 is due to the printhead-knife gap and is approximately 0.5". Although only one advertisement 60 is shown, preferably up to four marketing messages can be appended to the end of the receipt.

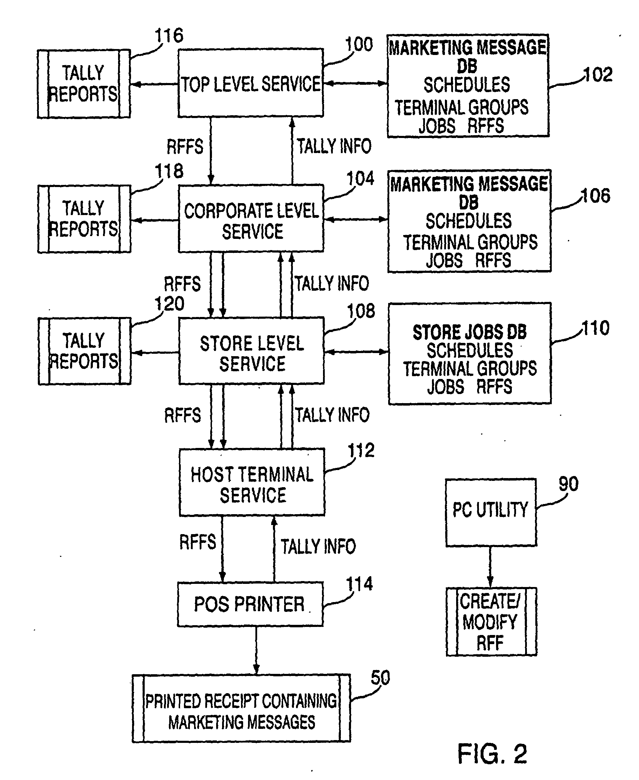

Referring to Fig. 2, a receipt master (RM) system according to an embodiment of the invention includes six key components. The overall concept of the RM system is to have one master database servicing brand name product manufacturers, one database servicing the corporate retail entity, and one database servicing the individual store. Retail entities can be further organized along geographic, demographic, or product lines. Stores can be further organized along checkout lane type, i.e., regular or express, or by department. The POS sites at each checkout counter automatically print marketing messages as determined by schedules from the store, corporate, and master levels of servicing.

(1) An RM PC utility 90 for 2-color or monochrome graphics mapping and text attribute mapping is the tool by which the end-user designs and saves receipt formats to include top logos, bottom logos, border messages, watermarks, and text attribute mapping. The RM utility is preferably PC based. After the receipt design is created, the design is formatted in a file, hereinafter referred to as the Receipt Format File (RFF), that includes both graphics files, e.g., bit-mapped files and graphics assignments, and text attribute mapping. The receipt format features of top logo, bottom logo, border message, and watermark are described above. An additional feature is text attribute mapping, i.e., a re-mapping of text attributes from one type of attribute such as bold text to another such as italics.

RM PC utility 90 provides the way of defining a text character string which is used by the printer as a trigger to modify the receipt format, e.g., suppressing the current receipt bottom logo and all appended advertisements along with suppressing the top logo, bottom logo, and all appended advertisements on the next receipt. RM PC utility 90 provides the ability to assign a unique filename to each RFF. RM PC utility 90 automatically assigns a unique index number to each RFF, which index number is placed in the file header. RM PC utility 90 also creates and populates an RFF database with RFF objects, which include the RFF file header, all graphics and graphics definitions, text attribute mappings, and text character string definitions.

(2) An RM top level download/scheduling service 100 and its associated database 102 is the highest level service for all subsequent levels of RM. Database 102 is the central database for all marketing messages across all retailers and retailer stores, i.e., the marketing messages that pertain to particular brands. In operation, the brand name product manufacturer buys a certain amount of advertising which is represented as marketing messages to be printed according to the scheduling controlled by service 100. Database 102 is preferably organized by retailer index number, wherein the index references the store group number and associated store numbers. Database 102 preferably includes all active marketing message files grouped by consumer brand name. Each marketing message file preferably contains a marketing message file index number as well as the consumer brand message in a graphic file format. A four-week, or greater, marketing message schedule is preferably maintained for each store or, in the case of larger retailers, store group number so that the stores of a retailer may be grouped demographically or geographically with the marketing messages targeted accordingly. An example of a one-week portion of this schedule is presented in Table 1.

**Table 1**

| **Retailer Index Number = 00001, Store Group Number = 001** | | | | | | | |
|---|---|---|---|---|---|---|---|
| | 4-22-02 | 4-23-02 | 4-24-02 | 4-25-02 | 4-26-02 | 4-27-02 | 4-28-02 |
| 00:00 | | | | | | | |
| 01:00 | | | | | | | |
| 02:00 | | | | | | | |
| 03:00 | | | | | | | |
| 04:00 | | | | | | | |
| 05:00 | | | | | | | |
| 06:00 | Ad00010001 | Ad00200001 | Ad00120010 | Ad00010002 | Ad00200002 | Ad00120015 | Ad00120016 |
| 07:00 | Ad00010001 | Ad00200001 | Ad00120010 | Ad00010002 | Ad00200002 | Ad00120015 | Ad00120016 |
| 08:00 | Ad00010001 | Ad00200001 | Ad00120010 | Ad00010002 | Ad00200002 | Ad00120015 | Ad00120016 |
| 09:00 | Ad00010001 | Ad00200001 | Ad00120010 | Ad00010002 | Ad00200002 | Ad00120015 | Ad00120016 |
| 10:00 | Ad00010001 | Ad00200001 | Ad00120010 | Ad00010002 | Ad00200002 | Ad00120015 | Ad00120016 |
| 11:00 | Ad00010001 | Ad00200001 | Ad00120010 | Ad00010002 | Ad00200002 | Ad00120015 | Ad00120016 |
| 12:00 | Ad00300001 | Ad00430006 | Ad00600101 | Ad00600102 | Ad00200003 | Ad00430007 | Ad00010001 |
| 13:00 | Ad00300001 | Ad00430006 | Ad00600101 | Ad00600102 | Ad00200003 | Ad00430007 | Ad00010001 |
| 14:00 | Ad00300001 | Ad00430006 | Ad00600101 | Ad00600102 | Ad00200003 | Ad00430007 | Ad00010001 |
| 15:00 | Ad00300001 | Ad00430006 | Ad00600101 | Ad00600102 | Ad00200003 | Ad00430007 | Ad00010001 |
| 16:00 | Ad00300001 | Ad00430006 | Ad00600101 | Ad00600102 | Ad00200003 | Ad00430007 | Ad00010001 |
| 17:00 | Ad00300001 Ad00500020 | Ad00430006 Ad00500022 | Ad00600101 Ad00500040 | Ad00600102 Ad00550121 | Ad00200003 Ad00560090 | Ad00430007 Ad00500040 | Ad00010001 Ad00600020 |
| 18:00 | Ad00300001 Ad00500020 | Ad00430006 Ad00500022 | Ad00600101 Ad00500040 | Ad00600102 Ad00550121 | Ad00200003 Ad00560090 | Ad00430007 Ad00500040 | Ad00010001 Ad00600020 |
| 19:00 | Ad00300001 Ad00500020 | Ad00430006 Ad00500022 | Ad00600101 Ad00500040 | Ad00600102 Ad00550121 | Ad00200003 Ad00560090 | Ad00430007 Ad00500040 | Ad00010001 Ad00600020 |
| 20:00 | | | | | | | |
| 21:00 | | | | | | | |
| 22:00 | | | | | | | |
| 23:00 | | | | | | | |

In the example of Table 1, each day follows a similar schedule pattern. The first marketing message of the day runs from 6:00 am until noon. At noon, the first marketing message terminates and a second marketing message is run until 20:00 (8:00 pm). At 17:00 (5:00 pm) a third marketing message is added to the second marketing message and runs until 20:00 (8:00 pm). At 20:00 (8:00 pm), all marketing messages are terminated. As noted above, up to four marketing messages can be run at one time. For a typical POS terminal in a Start-of-Day or End-of Day mode operating mode, up to four marketing messages can be placed at 00:00.

The RM top level download/scheduling service 100 preferably processes and generates various tally reports 116:

1. By retailer index number and store group number; accumulate the number of transactions per unique marketing message file index number. This report is used for consumer-brand invoicing.

2. Other tally information contained within the printer, e.g., the number of lines of print, number of knife cuts, number of hours on, etc.

3. Consolidated retailer-wide (by store number) tally database and tally reports. The report takes the form of a retailer tally report file. This typically is performed at weekly intervals.

4. A store tally interval, in hours, to be used by the RM Retail Corporate-level Download/Scheduling Service.

(3) An RM retail corporate-level download/scheduling service 104 is preferably a retail-corporate POS server-based program or "service" that manages the Receipt Format Files (RFFs) for all of the store servers attached to the retail-corporate server. Server 104 in this case services all stores owned or managed by the retailer, or may be a regional server servicing a regional group of stores owned or managed by the retailer. As an alternative for a small retailer with one store, corporate-level service 104 may in fact run on the same server as the store-level service.

Retail corporate-level download/scheduling service 104 preferably creates a database 106 or group of databases indexed by store number and lane group, which database represents the daily schedule for RFFs. The corporate-level service is preferably configured for "Retailer Index Number" which is used by corporate-level service 104 to search the associated database 102 located at top-level service 100. At the appropriate retailer index, configuration for store groups and associated store numbers is found and used in retrieving marketing message information.

Corporate-level service 104 preferably allows the user to create a weekly schedule, by store and by lane group, which includes daily and hourly intervals. The user inserts into this schedule the RFF index number for the file intended to become active at the top of that hour. An example of this schedule is presented in Table 2.

**Table 2**

| Store Number = 0001, Lane Group = 01 | | | | | | | |
|---|---|---|---|---|---|---|---|
| | Monday | Tuesday | Wednesday | Thursday | Friday | Saturday | Sunday |
| 00:00 | | | | | | | |
| 01:00 | | | | | | | |
| 02:00 | | | | | | | |
| 03:00 | | | | | | | |
| 04:00 | | | | | | | |
| 05:00 | | | | | | | |
| 06:00 | Ad00010001 | Ad00200001 | Ad00120010 | Ad00010002 | Ad00200002 | Ad00120015 | Ad00120016 |
| 07:00 | Ad00010001 | Ad00200001 | Ad00120010 | Ad00010002 | Ad00200002 | Ad00120015 | Ad00120016 |
| 08:00 | RFF0000001 Ad00010001 | RFF0000006 Ad00200001 | RFF0000001 Ad00120010 | RFF0000006 Ad00010002 | RFF0000001 Ad00200002 | RFF0000010 Ad00120015 | RFF0000010 Ad00120016 |
| 09:00 | Ad00010001 | Ad00200001 | Ad00120010 | Ad00010002 | Ad00200002 | Ad00120015 | Ad00120016 |
| 10:00 | Ad00010001 | Ad00200001 | Ad00120010 | Ad00010002 | Ad00200002 | Ad00120015 | Ad00120016 |
| 11:00 | Ad00010001 | Ad00200001 | Ad00120010 | Ad00010002 | Ad00200002 | Ad00120015 | Ad00120016 |
| 12:00 | RFF0000002 Ad00300001 | RFF0000007 Ad00430006 | RFF0000002 Ad00600101 | RFF0000007 Ad00600102 | RFF0000002 Ad00200003 | RFF0000011 Ad00430007 | RFF0000011 Ad00010001 |
| 13:00 | Ad00300001 | Ad00430006 | Ad00600101 | Ad00600102 | Ad00200003 | Ad00430007 | Ad00010001 |
| 14:00 | Ad00300001 | Ad00430006 | Ad00600101 | Ad00600102 | Ad00200003 | Ad00430007 | Ad00010001 |
| 15:00 | Ad00300001 | Ad00430006 | Ad00600101 | Ad00600102 | Ad00200003 | Ad00430007 | Ad00010001 |
| 16:00 | RFF0000003 Ad00300001 | RFF0000008 Ad00430006 | RFF0000003 Ad00600101 | RFF0000008 Ad00600102 | RFF0000003 Ad00200003 | RFF0000012 Ad00430007 | RFF0000012 Ad00010001 |
| 17:00 | Ad00300001 Ad00500020 | Ad00430006 Ad00500022 | Ad00600101 Ad00500040 | Ad00600102 Ad00550121 | Ad00200003 Ad00560090 | Ad00430007 Ad00500040 | Ad00010001 Ad00600020 |
| 18:00 | Ad00300001 Ad00500020 | Ad00430006 Ad00500022 | Ad00600101 Ad00500040 | Ad00600102 Ad00550121 | Ad00200003 Ad00560090 | Ad00430007 Ad00500040 | Ad00010001 Ad00600020 |
| 19:00 | Ad00300001 Ad00500020 | Ad00430006 Ad00500022 | Ad00600101 Ad00500040 | Ad00600102 Ad00550121 | Ad00200003 Ad00560090 | Ad00430007 Ad00500040 | Ad00010001 Ad00600020 |
| 20:00 | RFF0000004 | RFF0000009 | RFF0000004 | RFF0000009 | RFF0000004 | RFF0000013 | RFF0000014 |
| 21:00 | | | | | | | |
| 22:00 | | | | | | | |
| 23:00 | | | | | | | |

In the above example of Table 2, the store operates from 8:00 am until midnight, and each day is broken into four RFF message periods. Monday, Wednesday and Friday repeat the same RFFs. Tuesday and Thursday also repeat the same RFFs. Finally, Saturday and Sunday repeat the same messages. Alternatively, in a start-of-day or end-of-day mode of operation, a single RFF index number is entered at 00:00. The schedule provides for weekly retailer management of marketing messages created by the RM PC utility and maintained in the RFF database. Corporate-level service 104 preferably includes a simple "copy" feature that allows applying the same schedule details to multiple store schedules.

RM retail corporate-level service 104 also preferably accesses marketing message database 102 of RM top-level download/scheduling service 100. This marketing message database 102 is preferably a retailer network-wide repository for consumer-brand marketing messages and schedules. Corporate-level service 104 accesses this database according to a retailer index number, which is unique to each retailer. The configuration for accessing RM top-level download/scheduling service 100 includes the RM top-level download/scheduling service and the retailer index number.

Corporate-level service 104 preferably accesses top-level service database 102 to acquire marketing messages and schedule, and updates corporate-level service database 106 as follows:
1. updates store schedules to include marketing message (Ad) schedules; and
2. creates and updates the marketing message database to include new marketing messages and delete old marketing messages. The marketing message file preferably includes a file header with the marketing message file index number and includes the associated graphic message information.

Reference is now made to a "scheduler" which is preferably a component of top level service 100, corporate level service 104, and a store level service 108. The scheduler is the main user interface to the entire system, presenting a view of the available regions/stores/departments/lanes, the previously created receipt format files, and a timeline that represents which jobs are scheduled. A "job" is defined as an RFF/group combination scheduled by total count or time period or both, where a group is defined as a collection of POS printers receiving the same receipt/marketing message format. The main function of the scheduler is to allow the user to create new jobs which are assigned a format and a group of stores or departments to print the receipt. Feedback from the system in the form of download success/fail, job status, and printer diagnostic information is also available for reporting via menu options.

The scheduler preferably performs the following functions: creates and maintains the census of stores, departments, and lanes; creates and maintains the groups of census items; creates and maintains the list of jobs which are scheduled; creates and maintains the list of RFFs which are attached to jobs; determines when jobs are completed and signals the dispatcher component to terminate the job on next run; posts additions and changes to the job database to store servers for the dispatchers to process locally; appends target lanes to each job by store when the job is exported to the dispatchers; and imports, displays, and reports on printer statistics such as tallies, loader status, and diagnostic info from each store.

For each store number, and all associated lane groups, top-level service database 102 is preferably accessed by identifying the associated store group number.

RM retail corporate-level download/scheduling service 104 preferably processes and generates tally reports 118:
1. By store number, the accumulated number of transactions per unique marketing message file index number.
2. Other tally information contained within the printer, e.g., the number of lines of print, number of knife cuts, number of hours on, etc.
3. Consolidated store-wide tally database and tally reports, by store number. The reports, in the form of a store tally report file, are preferably downloaded to RM retail corporate-level download/scheduling service database 106 as indexed by store number. These reports and download are preferably performed at intervals defined in RM top-level service database 102 as the store tally interval, in hours.

(4) RM store-level download/scheduling service 108 is preferably a store POS server-based program or "service" that manages the RFFs for all of the host POS systems attached to the store server. The server, which in this case services a single store, typically supports multiple retail checkout lanes and corresponding multiple retail host POS terminals. The RFFs, created through features and capabilities of RM PC utility 90, preferably reside at RM retail corporate-level download/scheduling service database 106. Alternatively, where a corporate-level server does not exist, such as, for example, with a single-store retailer, the RFFs may reside at a local directory, that is, when RM retail corporate-level download/scheduling service 104 is running on the same server as the store-level service. An RM host terminal service 112 is installed at each host terminal.

RM store-level service 108 preferably includes the following configuration for RFF access:
1. the local directory name
2. the RM corporate-level service
   a. the pathname
   b. the network (for example, TCP/IP) address
   c. the http address

RM store-level service 108 and its associated database 110 also preferably include the following configuration: the store number, the lane group number(s), and the lane number(s) for each group. RM store-level service 108 preferably accesses RM corporate-level service database 106 according to store number and lane group number and updates the RFFs, the marketing messages, and the store schedule in database 110 for access by the associated RM host terminal services 112. RM store-level service database 110 is preferably updated whenever a store schedule change occurs at corporate-level service database 106.

Reference is now made to a "dispatcher" which is preferably a component of store level service 108, but is optionally a component of top level service 100 and corporate level service 104 to handle downloading RFFs and jobs from higher levels. When the dispatcher resides at the store server, it acts as the middleman between the scheduler at an upper level and the printer downloader. The dispatcher runs constantly, and at regular intervals, the dispatcher runs a series of tasks. Primary among these tasks is selecting the currently scheduled jobs and delivering the correct support files for those jobs to the downloader(s). The dispatcher also preferably provides a level of user interface, taking the form of viewing the status of attempted loads to the printers, the ability to view upcoming scheduled jobs, and a manual override capability for retrieving required marketing message files directly and to replace a scheduled receipt format with another one.

The dispatcher preferably performs the following functions: checks jobs as they are added to the level database from a higher level scheduler for the required marketing messages; downloads missing marketing message files from a higher level database; and regularly performing functions such as retrieving the status files from the lane directories, posting results to the appropriate level server, deleting the status files as necessary; checking the appropriate job database for jobs marked as completed, replace RFFs in completed lanes with the next RFF, checking the appropriate job database for jobs that are current, determining, for each current job, if the job is already present in the lane directories, copying new jobs to the lane directories, optionally controlling the downloading function for each lane, deleting completed jobs from the appropriate database, and checking the local versions of the RFFs to see if they are required by the remaining jobs and deleting them if not.

RM store-level service 108 provides the following services to the associated RM host terminal services 112:
1. Provides a series of lane group folders. Each folder preferably contains the valid RFFs, marketing messages, and lane group schedule for the associated RM host terminal services 112 by lane number.
2. Processes tally reports 120
   a. by lane group number, accumulating the number of transactions per unique marketing message file index number;
   b. with other tally information contained within the printer, e.g., number of lines of print, number of knife cuts, number of hours on, etc.; and
   c. generating consolidated store-wide tally database and tally reports by store number. The reports, preferably in the form of a store tally report file, are downloaded to RM retail corporate-level download/scheduling service database 106 as indexed by store number. This is preferably performed at intervals defined in corporate-level service database 106 as the store tally interval, in hours.

(5) RM host terminal service 112 is a host terminal based software application or "service" that preferably provides the interface between RM store-level download/scheduling service 108 and an RM-compatible printer 114 attached to the retail host terminal. Host terminal service 112 is responsible for accessing RFFs from RM store-level download/scheduling service 108 and in turn downloading these files to RM-compatible printer 114. Host terminal service 112 is also responsible for collecting tally information from RM-compatible printer 114 and uploading this information to RM store-level download/scheduling service 108.

The access path to RM store-level download/scheduling service 108 is preferably configurable as follows: (1) pathname, and (2) network address. One additional configuration is supported at RM host terminal service 112, namely lane number which serves as a unique lane identifier for store topology.

RM host terminal service 112 is capable of running in one of two modes:
(1) Mode 1: executed independently of the retail host terminal application. This is the non-concurrent mode, and is best suited to start-of-day or end-of-day operation of the RM application of the present invention. In this mode of operation, the RFFs are downloaded to printer 114 at start-of-day or end-of-day.
(2) Mode 2: executed concurrently with the retail host terminal application. This is the concurrent mode, and is best suited for scheduled operation of the RM application of the present invention. Concurrency is preferably established through execution in a multi-tasking host environment, with the program written as a WINDOWS® "service." Actual communication to printer 114 preferably employs a pipeline approach, or other common means of mitigating resource contention between the RM host terminal application of the present invention and the retail host terminal application. In the concurrent mode of operation, the RFFs or marketing message files are downloaded to printer 114 based on schedule information.

RM host terminal service 112 preferably accesses database 110 of RM store-level download/scheduling service 108, indexed by lane group number, with lane numbers being associated with lane group numbers at store-level service database 110, and accesses the next RFF marketing message file to be downloaded to RM-compatible printer 114 based on the schedule found in the lane group folder. This file is preferably downloaded to printer 114 according to the scheduled time. Similarly, RM host terminal service 112 sends a "delete marketing message file" according to the same database schedule.

RM host terminal service 112 also preferably finds a host tally time interval in RM store-level service database 110 that defines a time period for sending a request to the attached RM-compatible printer 114 for tally information, i.e., a request for tallies. Upon receipt of the tally information from printer 114, host terminal service 112 preferably downloads the tally data to RM store-level service 108 indexed in database 110 by lane group number and lane number.

(6) RM-compatible printer 114 preferably possesses firmware capable of supporting all requests from RM host terminal service 112. Printer 114 preferably realizes an RFF or marketing message file received from RM host terminal service 112 by:
(a) Merging RFF graphics and transaction text in a defined and repeatable manner. Fig. 1 depicts how end-user managed graphics are applied to receipt 50. A knife-cut command is the key to complete the current receipt, perform the knife cut, and then pre-stage the next receipt, typically by printing the top logo. Dimensions A thru G in Fig. 1 depict typical offsets used in formatting the receipt; however, these offsets may be variable in nature. The contents of an RFF is applied to the next transaction following receipt of the file.
(b) Appending marketing messages to the end of the receipt as represented by "Ad 1" at reference numeral 60 in Fig. 1. Preferably, up to four sold marketing messages may be appended to receipt 50. Multiple marketing messages may be scheduled in a round-robin fashion in that at each transaction the printer firmware rotates through the active marketing messages and prints a different one at each transaction.
(c) Processing, preferably via firmware, a "delete marketing message file" by eliminating the appropriate marketing message according to the marketing message file index number.
(d) Supporting the real-time functionality of character-string detection. Upon detection of the character-string as defined in the RFF, one of two defined actions preferably occurs:
   1. Suppress bottom logo and all appended marketing messages of the current receipt
   2. Suppress top and bottom logos and all appended marketing messages on the next receipt.

Printer 114 preferably processes a "request for tallies" received from RM host terminal service 112 by providing:
(a) the number of transactions per marketing message file index number. Upon fulfilling this request, the printer firmware resets the transaction count to 0.
(b) other tally information contained within the printer, e.g., the number of lines of print, number of knife cuts, number of hours on, etc.

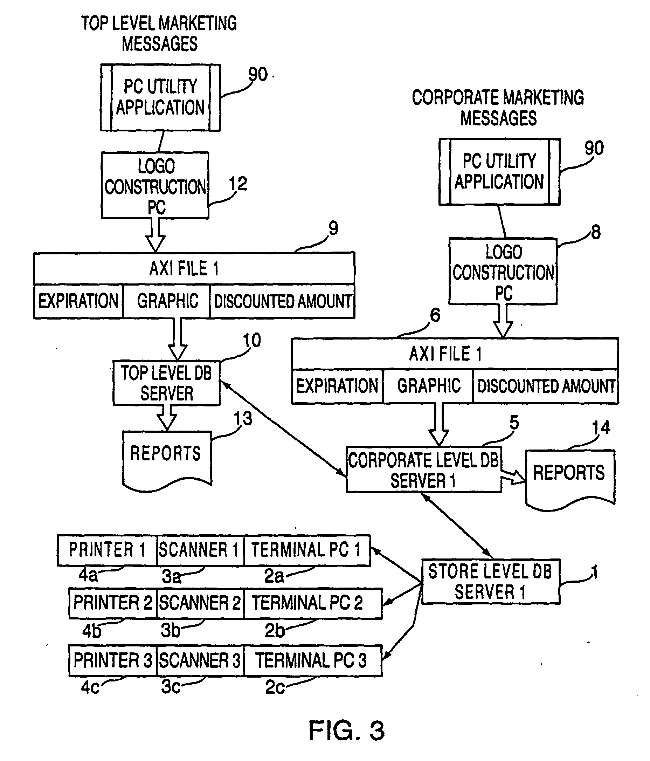

Referring also to Fig. 3, a schematic of the components of the present invention is shown in which a point-of-sale system records sales transactions involving marketing messages. As is known in the art, the POS system typically includes means for identifying the time of day, day of week, total value, and number of items relating to any one transaction. In each store in which the invention is to be used, there is a store level database server 1, where store level service 108 resides, and a plurality of checkout terminals 2 where host terminal service 112 resides, each having an associated optical scanner 3. In larger organizations there may on occasion be a corporate level database server 5, where corporate level service 104 resides, used to direct information/data from a central location to various retailers within a chain of retailers. Although server 5 is shown and described hereafter, it is not necessary for the present invention.

Maintained on corporate level server 5, or on store level server 1 if no chain server 5 is used, is a retailer receipt format scheduler 6 within which is the information regarding the date a marketing message is to be printed, the time of day the marketing message is to be printed, and the marketing message file itself. Scheduler 6 is preferably part of store level service 108 or corporate level service 104. Marketing messages stored by retailer receipt format scheduler 6 are intended for but not restricted to the promotional information which is not of the consumer product group in nature, such as in-store marketing messages. Control of the content of receipt format scheduler 6 can be under the control of the retail company or of a contracted third party. Marketing message files are created using PC utility 90 which preferably resides on a desktop computer 8.

A consumer product group (CPG) marketing message scheduler 9 preferably resides on a top level database server 10, upon which also resides top level service 100. The purpose of CPG marketing message scheduler 9 is to schedule the dispersal of consumer product group advertising. CPG marketing message scheduler 9 preferably contains information regarding the date a marketing message is to be printed, the time of day the marketing message is to be printed, and the marketing message file itself. Scheduler 9 is preferably managed by a party other than the retailer. Marketing messages resident in scheduler 9 are preferably created using PC utility 90. In a similar fashion to the creation of the retailer messages, PC utility 90 is preferably resident on a desktop computer 12.

Both server 10 and server 5 are preferably capable of outputting tally reports 13, 14 on either a time based interval or upon request. The information contained on reports 13, 14 preferably includes at least a lane group number and accumulated number of transactions per unique marketing message. The information contained on reports 13, 14 is preferably constructed using information coming from POS printer 4 (POS printer 114 in Fig. 2) regarding the printing frequency with which each particular marketing message is printed. Workload information, such as number of lines printed, number of knife cuts, number of hours on etc. can also be added to tally reports 13, 14 if desired: Tally reports 13, 14 are also preferably capable of presenting the data in several different formats for the benefit of marketing studies.

PC utility 90 preferably allows a user to input previously created graphics files of the .bmp format and, with the addition of data, output a receipt format file (RFF). RFFs preferably contains information regarding the marketing message to be added to the transaction receipt, the position the marketing message takes on the receipt, and the trigger(s) that are used to notify POS printer 114 to print the defined marketing message(s) in the defined location(s). The term "marketing message" includes text and/or graphics, in any combination. Graphics preferably include imported images/logos, surround graphics, strike through graphics, underline graphics, reverse video graphics, bold text graphics, and double high text graphics. Predefined graphics positions preferably include top logos, bottom logos, border messages, and watermarks.

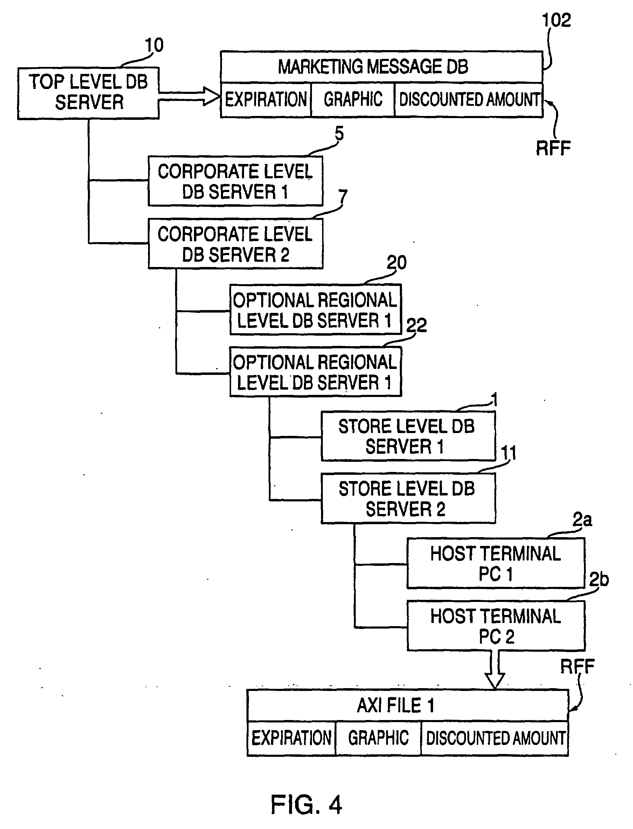

Referring to Fig. 4, an embodiment of the present invention is shown in an illustrative configuration. Top level database server 10 contains the RFFs from the brand name manufacturers in database 102. Two corporate level database servers 5 and 7, each representing separate retail corporate entities, interface with top level database server 10. Two optional regional level database servers 20, 22 interface with corporate level database server 7. Two store level database servers 1, 11 interface with regional level database server 22. Two host terminal PCs 2a, 2b, each one serving a customer lane, are interfaced with store level database server 11. Host terminal PC 2b is shown with an RFF loaded for printing.

Referring again to Fig. 2, an end user uses the system and method of the present invention as follows. The end user creates a new receipt format, and saves the RFF to the appropriate level database. Using a user interface to the system, which is explained in more detail below, a job for this receipt format is created and associated with a group of locations. An appropriate start and end date for the job is entered. Upon saving the job, the appropriate level scheduler derives the stores and target lanes from the group, and creates records in a LocalJob table for distribution. The LocalJob records are preferably immediately sent to the store level servers and marked as delivered. If a store server is offline, the LocalJob records is left unmarked, while periodic attempts are made at delivery until the store server is available.

The dispatcher component periodically checks the LocalJobs table for new records sent from an upper level service. If a new job is found, the accompanying receipt format information (RFF) is parsed to determine if all of the marketing messages are already present at the local level. If not, the dispatcher pulls these files down from the appropriate higher level server to a mirror-image directory on the local server.

Preferably at a regularly scheduled time during the day, the dispatcher retrieves any printer status information and tallies, forwarding them to the next higher level database, and sets up the current RFFs in the appropriate locations for the loader component to perform the download. The loader component for each lane finds the marketing message files in a central location at the store server, which avoids duplicating many files. This location is configurable, but normally would not change once a store was in operation.

At the time a register is closed, or at another time when the printer is available, the loader component is run, copying the required files from the store server into the printer flash memory, and also retrieving printer information to be passed back upstream. A local success/fail file is written, which allows the store manager to determine if a printer had a problem, and requires a reload.

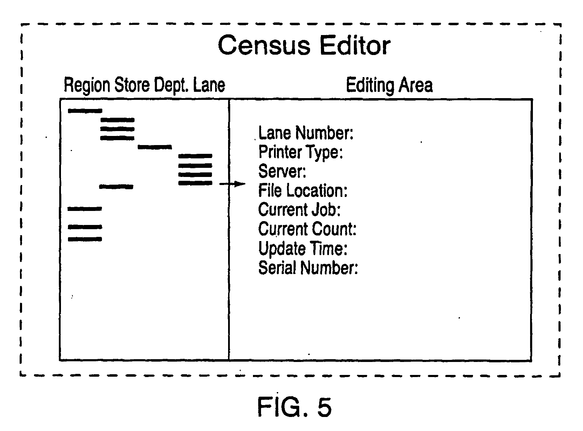

Referring to Figs. 5-9, the user interface is described. The shell is preferably an MDI (Multiple Document Interface) container form that displays the menus for the scheduler. It keeps all the forms presented as the user interface together, in one window, which is standard for a WINDOWS® application. This implementation allows having multiple windows open to allow a user to view the timeline, maintain the census, and edit groups without having to close any open windows.

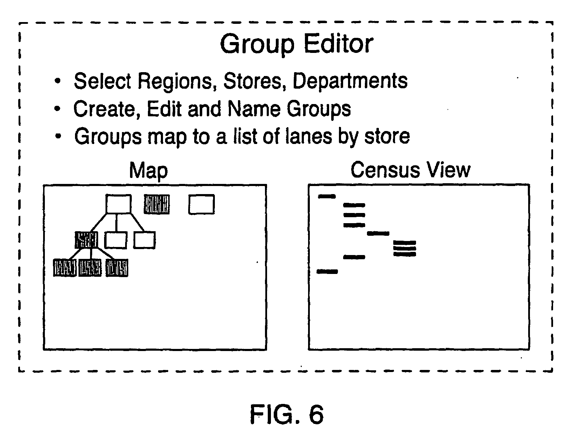

The census view, shown in Fig. 5, provides the browse/edit function for accessing the database of store locations. The census view preferably is based on a tree view of the regions, stores, departments, and lanes that are available across a store chain. The group editor, shown in Fig. 6, allows selecting a portion of the census to represent a desired target for a common receipt format, and then saves that set as a unit to be selected when defining a new job. The group editor could be provided as a separate window, or could be folded into the census view. The package view, not shown, is similar to a clip art library function in a desktop publishing program. It is preferably used to link to PC utility 90 to provide a seamless environment for creating and deploying receipt formats. The main function of the package view is to simplify selecting a receipt format to be deployed from the scheduler.

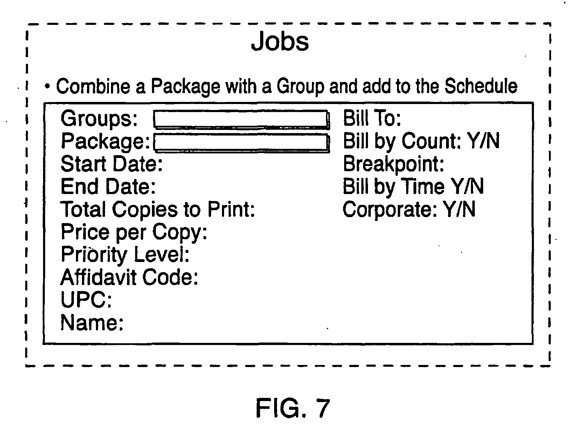

The job view as shown in Fig. 7 permits the user to create a job by combining a group with a package. This can be done by entering the information in the appropriate fields, by using a drop down menu, or by using click & drag from a master list. The user must name the job, select a group to deploy the job to, select a master receipt format to describe the contents of the job, and select a date range over which the job is valid. In addition, the user could specify a specific count of items to be produced before the job is considered to be complete.

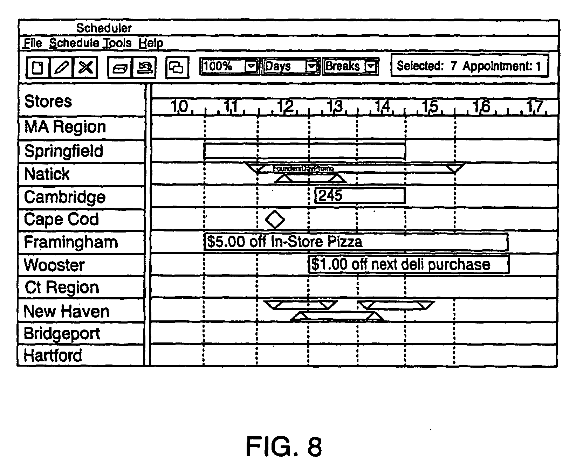

The schedule view, as shown in Fig. 8, preferably makes use of a commercially available schedule display component to depict a timeline view of scheduled jobs by groups. The schedule view is preferably the heart of the user interface in the sense that all the other functions of the interface are preferably capable of being accessed directly from the timeline in some fashion.

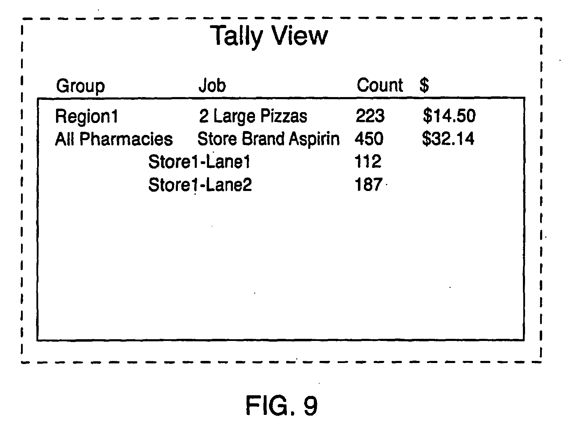

The reporting features in the user interface can vary widely depending on the eventual user focus. Basic information includes download status, printer information, and job schedules. An example of a tally view is shown in Fig. 9, which shows printing counts by various groupings by job. A version of the present invention that incorporates selling advertising space on the receipt would require invoicing, tallies, proof of publication (affidavits), and other types of printed reports.

Novel features of the invention include:

(1) The ability to schedule text and/or graphics messages on the transaction receipt printer, i.e., printer 114. This operation is implemented through the use of databases 106 and 110, which have information in tables that describes the marketing message distribution job, and a software application, i.e., services 104 and 108, respectively, that manipulate the contents of databases 106, 110. Files and/or data that are created by RM PC Utility 90 are imported into the appropriate scheduling database. This imported data represents a "job" and its associated package of graphic images. For purposes of this application, "job" is defined as the schedule and associated RFFs. A date and time for the beginning and ending of the job is stored as a part of the job record. A group number is assigned to the job to indicate which lane groups within stores this job is to be deployed to. Lane groups are groupings of checkout lanes in a store, with the exact grouping depending on the type of store. In a grocery store, for instance, one group of lanes could be the express lanes, one group the regular lanes, and a third group a set of lanes expressly serving a deli/prepared ready to eat food area. In a department store, lanes could be grouped by departments. Thus, marketing messages pertaining to tires would be deployed to the lanes in the automotive department of a department store and not to the lanes in the women's clothing department.

(2) The ability to graphically represent the schedule of messages by lane groups. The top, corporate, or store level services 100, 104, 108 preferably use graphical means to allow the user to create, update and review the jobs to be deployed. In the preferred setup, the user interface exists at the top level and the corporate level, but the user interface can also be set up at the store level of the corporate retail entity when set up that way. The default view is arranged according to the groups of terminals associated with a specific job, but the system supports the display of subsets of locations or the display of a single store with terminals grouped by job or by store department. In addition, the system depicts the database of locations in a hierarchical tree view, allowing the user to navigate the store chain by location to edit or review store, department, and terminal specific information and status.

(3) The ability to execute conflict resolution through use of lane level information. RM store-level download/scheduling service 108 preferably implements a form of automatic conflict resolution based on the number of lanes affected by a conflict between two different receipt formats scheduled to be deployed to the same location at the same time. During each scheduled update transaction, when the files made available to RM PC Utility 90 are distributed, RM store-level download/scheduling service searches for previously deployed and active jobs which overlap the distribution location for the current job. If the total number of printers affected by distribution of the current job is less than the number of printers targeted by the overlapping job, the current job is allowed to replace the previously deployed job. The assumption is that smaller distribution groups imply specialized and intentional overrides of the larger set of files. In addition, when a job terminates, the RM store-level download/scheduling service attempts to locate a job which would have been overridden in order to redeploy the previous set of files so that the lower priority job resumes when the higher priority job ends. In like manner, if a job subsequent to the higher priority job enters the schedule and becomes current once the higher priority job ends, the system of the invention attempts to determine the existence of the subsequent job and to deploy those files once the preemptive job expires. The priorities of the various jobs is preferably set at the corporate retail level.

(4) The ability to manually download files at the lane. If the store network goes down, or if the store is of the small "Mom & Pop" variety, the ability to manually download and prime each POS printer using a device such as a PDA (personal data assistant) becomes important. RM terminal host service 112 features the capability of being run in manual mode, which allows override and manual operation. This mode allows the program to attempt to re-download the previously deployed receipt format files, or the user can redirect the RM terminal host 112 to another location to download a different set of files.

(5) The ability to distribute messages with lane and time control. At the time a job is committed by corporate level service 104 to being deployed, which stores contain the targeted lanes for this particular job is determined, based on the lanes contained in the groups assigned to the job. A record for each job by store is created. This record has additional information about the location of the file directories where the lane-based printer download program expects to find these files during the next download opportunity window. The scheduling component initiates a database transaction with each store's database to copy the localized job records to the store database. A separate software process, i.e., a dispatcher program preferably contained within both corporate level service 104 and store level service 108 checks the next higher level database periodically to determine what jobs are scheduled at the current time. The store-level component then converts the database information into files which the lane-based printer download program on the host terminal can interpret and process, and stores the files in the directories identified for the destination lanes.

(6) The ability to record the number of transactions per unique marketing message. The targeted printer preferably contains firmware instructions that allow it to collect a running total of printings for each stored marketing message. When the printer interacts with the host terminal service 112 that supplies updates for the receipt format information, host terminal service 112 can request and receive these counts. Because host terminal service 112 overlies the POS application, host terminal service 112 can't access POS printer 114 except at certain times, such as the end of day service. At that time, host terminal service 112 picks up the tallies from printer 114 and downloads the new marketing messages for the next day's operation. Host terminal service 112 exports the accumulated totals to a known location in the form of a text file in a given format. These tallies are retrieved by RM store-level download/scheduling service 108 and stored in database 110 for later use. The totals for each marketing message are associated with the current job running at that printer by use of a unique identifier code for each job. In addition, the marketing message is also assigned a unique checksum value to function as a proof of publication code when individual marketing messages contain separately billable advertising entities.

(7) The ability to receive feedback as to the status of a scheduled job, i.e., a successful download. As a part of the process of downloading receipt formats (RFFs) to printer 114 at the target lane, RM terminal host 112 writes a status file back to the directory where the RFFs are stored, i.e., either locally at the host terminal or at store level database 110, for the target lane at the completion of the download process. This status file preferably contains date/time stamp information, success or fail codes, and information about the job being downloaded and the location of the fatal error, if any, in the RFF. This status file is opened, data retrieved by RM store-level download/scheduling service 108, and the results are stored in corporate level database 106 for later retrieval. RM store-level download/scheduling service also updates the corporate level master schedule database 106 for the job and lane information to indicate whether the download attempt was successful.

## Claims

1. A system for downloading and scheduling marketing messages to be printed on a point of sale (POS) printer controlled by a host terminal, comprising:
first means for executing instructions embodied in machine readable code;
said first means including means for downloading a marketing message from a first party;
said first means including means for storing said downloaded marketing message in a first storage medium;
said first means including means for scheduling said marketing message to be printed on said POS printer on at least one predetermined time and date;
said first means including means for associating said marketing message with its printing schedule;
second means for executing instructions in machine readable code;
said second means including means for downloading said marketing message and its associated schedule from said first storage medium to a second storage medium;
said second means including means for associating said marketing message and its associated schedule with said host terminal;
third means for executing instructions in machine readable code; and
said third means including means for downloading said marketing message and its associated schedule and its designated host terminal from said second storage medium to a third storage medium.

2. A system according to claim 1, wherein said third means resides in said host terminal.

3. A system according to claim 1 or claim 2, further comprising:
fourth means for executing instructions in machine readable code; said fourth means residing in said host terminal; and
said fourth means including means for downloading said marketing message and its associated schedule and its designated host terminal from said third storage medium to a fourth storage medium.

4. A system according to claim 3, wherein said fourth storage medium resides on said host terminal.

5. A system according to any of claims 1 to 4, further comprising means for printing said marketing message at its scheduled time on said POS printer.

6. A system according to any of claims 3 to 5, wherein said fourth means includes means for gathering tally information from said POS printer and uploading said tally information to said third means.

7. A system according to claim 6, wherein said third means includes means for gathering tally information from said fourth means and uploading said tally information to said second means.

8. A system according to claim 7, wherein said third means includes means for gathering tally information from said fourth means and printing a tally report based at least in part on^{*} said tally information.

9. A system according to claim 7, wherein said second means includes means for gathering tally information from said third means and uploading said tally information to said first means.

10. A system according to claim 9, wherein said second means includes means for gathering tally information from said third means and printing a tally report based at least in part on said tally information.

11. A system according to claim 9, wherein said first means includes means for gathering tally information from said second means and printing a tally report based at least in part on said tally information.

12. A system according to any of the preceding claims, further comprising means, interoperable with said first, second, and/or third means, for creating and/or modifying said marketing message.

13. A system according to any of claims 3 to 12, further comprising means, interoperable with said fourth means, for creating and/or modifying said marketing message.

14. A system according to any of the preceding claims, further comprising means, interoperable with said second means, for modifying said printing schedule for said marketing message.

15. A system according to any of the preceding claims, further comprising means, interoperable with said third means, for modifying said printing schedule for said marketing message.

16. A system according to any of the preceding claims, further comprising means for recording a number of times said marketing message is printed on said POS printer.

17. A system according to any of the preceding claims, further comprising means for receiving feedback as to a status of a successful download of said marketing message to said POS printer.

18. A system according to any of claims 5 to 17, wherein said second means serves one corporate retail entity, said third means serves one store entity, and said fourth means serves one lane entity;
wherein a plurality of lane entities within said store entity are grouped into at least first and second lane groups; and
wherein said system further comprises means for graphically representing a schedule of messages by lane groups.

19. A system according to any of claims 5 to 17, wherein said second means serves one corporate retail entity, said third means serves one store entity, and said fourth means serves one lane entity;
wherein a plurality of lane entities exist within said store entity; and wherein said system further comprises means for executing conflict resolution by using lane entity information.

20. A system according to any of claims 5 to 17, wherein said second means serves one corporate retail entity, said third means serves one store entity, and said fourth means serves one lane entity;
wherein a plurality of lane entities exist within said store entity; and
wherein said system further comprises means for manually downloading files at each lane entity.

21. A system according to any of claims 5 to 17, wherein said second means serves one corporate retail entity, said third means serves one store entity, and said fourth means serves one lane entity;
wherein a plurality of lane entities exist within said store entity; and
wherein said system further comprises means for distributing said marketing messages with lane and time control.

22. A method for downloading and scheduling marketing messages to be printed on a point of sale (POS) printer controlled by a host terminal, comprising the steps of:
downloading a marketing message from a first party;
storing said downloaded marketing message in a first storage medium;
scheduling said marketing message to be printed on said POS printer on at least one predetermined time and date;
associating said marketing message with its printing schedule;
downloading said marketing message and its associated schedule from said first storage medium to a second storage medium;
associating said marketing message and its associated schedule with said host terminal; and
downloading said marketing message and its associated schedule and its designated host terminal from said second storage medium to a third storage medium.

23. A method according to claim 22, wherein said third storage medium resides in said host terminal.

24. A method according to claim 22 or claim 23, further comprising the step of downloading said marketing message and its associated schedule and its designated host terminal from said third storage medium to a fourth storage medium.

25. A method according to claim 24, wherein said fourth storage medium resides on said host terminal.

26. A method according to claim 25, further comprising the step of gathering tally information from said POS printer and uploading said tally information to said third storage medium.

27. A method according to claim 26, further comprising the steps of:
gathering tally information from said fourth storage medium; and
uploading said tally information to said second storage medium.

28. A method according to claim 26, further comprising the steps of:
gathering tally information from said fourth storage medium; and
printing a tally report based at least in part on said tally information.

29. A method according to claim 27, further comprising the steps of:
gathering tally information from said third storage medium; and uploading said tally information to said first storage medium.

30. A method according to claim 27, further comprising the steps of:
gathering tally information from said third storage medium; and printing a tally report based at least in part on said tally information.

31. A method according to claim 29, further comprising the steps of:
gathering tally information from said second storage medium; and printing a tally report based at least in part on said tally information.

32. A method according to any of claims 22 to 31, further comprising the step of creating and/or modifying said marketing message.

33. A method according to any of claims 22 to 32, further comprising the step of modifying said printing schedule for said marketing message.

34. A method according to any of claims 22 to 33, further comprising the step of recording a number of times said marketing message is printed on said POS printer.

35. A method according to any of claims 22 to 34, further comprising the step of receiving feedback as to a status of a successful download of said marketing message to said POS printer.

36. A method according to claim 24, further comprising the steps of:
serving a first one of a plurality of lane entities with said fourth storage medium;
serving at least a second one of said plurality of lane entities with a fifth storage medium;
grouping said plurality of lane entities into at least first and second lane groups; and
graphically representing a schedule of messages by lane groups.

37. A method according to claim 24, further comprising the steps of:
serving a first one of a plurality of lane entities with said fourth storage medium;
serving at least a second one of said plurality of lane entities with a fifth storage medium;
grouping said plurality of lane entities into at least first and second lane groups; and
executing conflict resolution by using lane entity information.

38. A method according to claim 24, further comprising the steps of:
serving a first one of a plurality of lane entities with said fourth storage medium;
serving at least a second one of said plurality of lane entities with a fifth storage medium;
grouping said plurality of lane entities into at least first and second lane groups; and
manually downloading files at each lane entity.

39. A method according to claim 24, further comprising the steps of:
serving a first one of a plurality of lane entities with said fourth storage medium;
serving at least a second one of said plurality of lane entities with a fifth storage medium;
grouping said plurality of lane entities into at least first and second lane groups; and
distributing said marketing messages with lane and time control.
